# EUROPÄISCHE PATENTANMELDUNG

(11) **EP 0 523 326 A1**
(43) Veröffentlichungstag der Anmeldung: **20.01.1993**
(21) Anmeldenummer: 92106204.8
(22) Anmeldetag: 10.04.1992
(51) Int. Cl.: C08L 77/00, C08L 81/02

(54) **Formmassen auf Basis aromatischer Polyamide**

(30) Priorität: 12.06.1991 DE 4119299
(71) Anmelder: HÜLS AKTIENGESELLSCHAFT, D-45764 Marl (DE)
(72) Erfinder: Poll, Günter, Dr., W-4370 Marl (DE); Finke, Jürgen, Dr., W-4370 Marl (DE); Modler, Harald, Dr., W-4630 Bochum (DE); Beyer, Horst, W-4370 Marl (DE)

(57) **Zusammenfassung**

2.1 Es sollen Formmassen mit einem möglichst geringen Schmelzviskositätsindex und verbesserten mechanischen Eigenschaften zur Verfügung gestellt werden.

2.2 Dies wurde durch Formmassen erreicht, die
I. ein aromatisches Polyamid mit der Grundstruktur 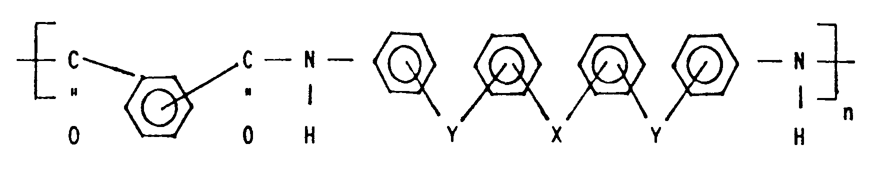 und
II. ein Polyarylensulfid mit der Grundstruktur 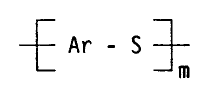 enthalten.

2.3 Mit Hilfe der Erfindung gelingt es, Formmassen mit dem gewünschten verbesserten Eigenschaftsbild zu erhalten.

## Beschreibung

Gegenstand der Erfindung sind Formmassen auf Basis aromatischer Polyamide.

Die Herstellung aromatischer Polyamide mit der Grundstruktur 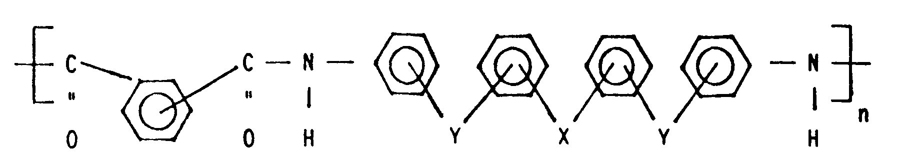
ist grundsätzlich bekannt (DE-OS 36 09 011). Die Schmelzviskosität dieser aromatischen Polyamide ist allerdings erheblich. Daher sind bei ihrer Herstellung und Verarbeitung sehr hohe Temperaturen erforderlich - im allgemeinen mindestens 350 °C. Bei diesen Temperaturen wird häufig eine Schädigung des Produktes beobachtet, erkennbar an Verfärbung oder einer Verschlechterung der mechanischen Eigenschaften. Es besteht daher Bedarf daran, die Schmelzviskosität der genannten aromatischen Polyamide zu verringern.

Aufgabe der Erfindung war es, aromatische Polyamide zur Verfügung zu stellen, die die geschilderten Nachteile der Produkte des Standes der Technik nicht aufweisen.

Diese Aufgabe wurde durch Formmassen gelöst, die
I. ein aromatisches Polyamid mit der Grundstruktur 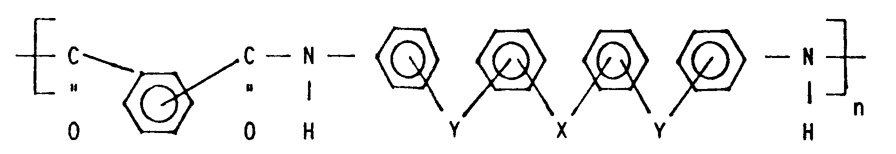 wobei
   - X:: -SO₂-; -CO-
   - Y:: -O-; -S-
   bedeuten,
   und
II. ein Polyarylensulfid mit der Grundstruktur 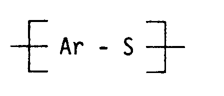 wobei
   - Ar:: 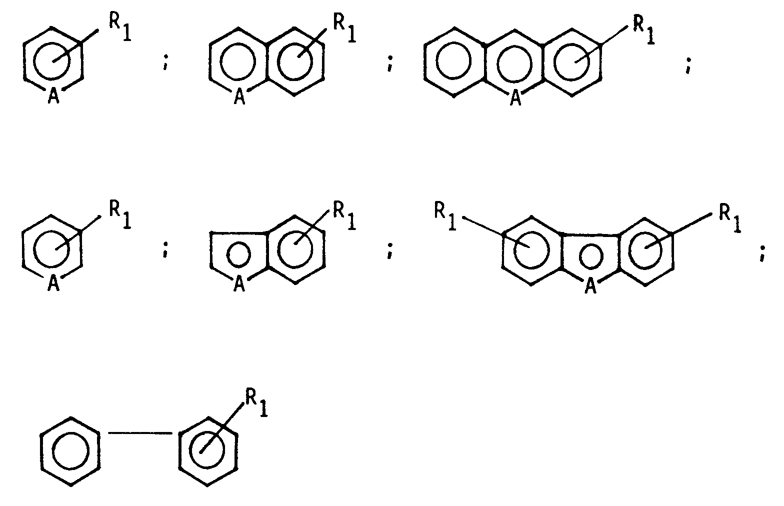
   - A:: -C-; -S-; -O-; -N-;
   - R₁:: -H; C₁ bis C₄ - Alkylreste;
   -O-C₁- bis -O-C₄-; -COOH; -CONH-R₂; 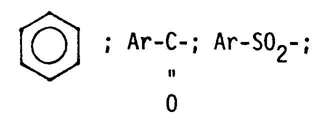 -OH; -NO₂; Halogene
   - R₂:: C₁ bis C₄ - Alkylreste;
   bedeutet,
   enthalten.

Bevorzugt werden Formmassen, bei denen das Gewichtsverhältnis der Komponente I. zu Komponente II. im Bereich von 95 : 5 bis 5 : 95, vorzugsweise im Bereich von 90 : 10 bis 10 : 90, liegt.

Die Polyamide (Komponente I.) enthalten als aromatische Dicarbonsäuren Isophthalsäure, Terephthalsäure, 1.4-, 1.5-, 2.6-, 2.7-Naphthalindicarbonsäure, 4.4'-Diphenyletherdicarbonsäure oder 4.4'-Benzophenondicarbonsäure, 4.4'-Diphenylsulfondicarbonsäure, 2-Phenoxy-terephthalsäure, 4.4'-Biphenyldicarbonsäure oder Gemische davon.

Bevorzugt wird Isophthalsäure allein oder ein Gemisch von Isophthalsäure mit einer der weiteren oben genannten Säuren eingesetzt. Im letzteren Fall werden bis zu 45 Mol-% Isophthalsäure ersetzt.

Als aromatische Diamine kommen z. B. 4.4'-Bis(4-aminophenoxy)diphenylsulfon, 4.4'-Bis(3-aminophenoxy)diphenylsulfon, 4.4'-Bis(4-aminophenoxy)benzophenon, 4.4'-Bis(3-aminophenoxy)benzophenon, 4.4'-Bis(p-aminophenylmercapto)benzophenon, 4.4'Bis(p-aminophenylmercapto)diphenylsulfon oder Gemische davon in Frage.

Bevorzugt wird 4.4'-Bis(4-aminophenoxy)diphenylsulfon verwendet.

Das molare Einsatzverhältnis von Dicarbonsäure zu Diamin bewegt sich im Bereich von etwa 0,9 : 1 bis zu 1 : 0,9.

Um eine verbesserte Hydrolysebeständigkeit der aromatischen Polyamide (Komponente I.) zu erreichen, können noch 0,01 bis 10 Mol-% - bezogen auf die Summe von Dicarbonsäure und Diamin - eines niedermolekularen aliphatischen, araliphatischen oder aromatischen Carbonsäureamids zugesetzt werden. Hierbei kann der aromatische Rest durch Halogen oder durch C₁- bis C₄-Alkylreste substituiert sein. Diese Maßnahme wird in DE-OS 38 04 401 beschrieben.

Die Hydrolysebeständigkeit kann ebenfalls dadurch verbessert werden, indem die Dicarbonsäure in geringem Überschuß eingesetzt (DE-OS 39 35 467) oder, falls Dicarbonsäure und Diamin ungefähr äquimolar vorliegen, zusätzlich eine Monocarbonsäure zugegeben wird (DE-OS 39 35 468).

Die Herstellung der aromatischen Polyamide ist grundsätzlich bekannt. Sie wird u. a. in DE-OS 36 09 011 beschrieben.

Bevorzugt wird bei der Herstellung der aromatischen Polyamide ein Phosphor enthaltender Katalysator verwendet. Hierfür kommen insbesondere Säuren der allgemeinen Formel H₃POₐ mit a = 2 bis 4 sowie Derivate davon in Frage. Insbesondere sind Phosphorsäure, Phosphorige Säure, Hyperphosphorige Säure, Phosphonsäure, z. B. Methanphosphonsäure, Phenylphosphonsäure; Phosphonigsäure, z. B. Benzolphosphonigsäure; Phosphinsäure, z. B. Diphenylphosphinsäure, zu nennen. Anstelle der reinen Säuren können auch Salze davon eingesetzt werden. Geeignete Kationen sind z. B. Metalle der Alkali- bzw. Erdalkaligruppe, Zinn, o. ä.

Der Katalysator wird in einer Menge von 0,01 bis 4,0 Mol-%, vorzugsweise 0,2 bis 2,0 Mol-% - bezogen auf die Summe von Dicarbonsäure und Diamin - eingesetzt.

Eine bevorzugte Arbeitsweise bei der Herstellung der aromatischen Polyamide ist es, neben dem Katalysator noch Dialkylaminopyridine als Cokatalysator einzusetzen.

Besonders geeignete Dialkylaminopyridine sind solche mit 1 bis 10 C-Atomen in der Alkylgruppe. Bevorzugt verwendet werden 4-Dimethylaminopyridin, 4-Dibutylaminopyridin, 4-Piperidinylpyridin, die gegebenenfalls zusammen mit dem Aminostickstoff einen Pyrrolidin oder Piperidinring bilden können.

Sofern ein Cokatalysator benutzt wird, wird er in einer Menge von 0,05 bis 4 Mol-%, vorzugsweise von 0,2 bis 2 Mol-% - bezogen auf die Summe Dicarbonsäure und Diamin - eingesetzt. In besonders bevorzugten Fällen wird der Cokatalysator in einer äquivalenten Menge zu dem Katalysator in die Reaktionsmischung zugegeben.

Die Reaktion wird in der Schmelze bei Temperaturen im Bereich von 200 bis 400 °C, vorzugsweise von 230 bis 360 °C durchgeführt.

Üblicherweise wird unter Inertgas bei Normaldruck gearbeitet. Es kann jedoch auch bei Über- bzw. Unterdruck gearbeitet werden.

Zur Erhöhung des Molekulargewichtes können die aromatischen Polyamide einer Festphasennachkondensation in einer Inertgasatmosphäre unterzogen werden.

Die Schmelztemperatur der aromatischen Polyamide liegt im Bereich von 150 bis < 390 °C, vorzugsweise im Bereich von 220 bis 310 °C, die Glastemperatur (T_{g}) im Bereich von 190 bis 270 °C. Die Viskositätszahlen (J-Werte) zeigen Werte von 30 bis 150 cm³/g, bevorzugt bei 60 bis 120 cm³/g. Der Schmelzviskositätsindex (MVI-Wert) weist Werte von 0:5 bis 60 cm³/10 min., vorzugsweise von 5 bis 15 cm³/10 min., auf.

Polyarylensulfide mit der oben angeführten Grundstruktur (Komponente II.) sind grundsätzlich bekannt (US-PS 3 354 129; EP-OS 0 171 021).

Die Schmelztemperatur (Tₘ) der Polyarylensulfide liegt im Bereich von 230 bis 330 °C, vorzugsweise von 270 bis 290 °C. Der Schmelzviskositätsindex (MVI-Wert) bei 320 °C/10 kg Last weist Werte von 0,3 bis 350 cm³/10 min., vorzugsweise von 10 bis 300 cm³/10 min. auf.

Die Komponenten I. und II. können auf üblichen Maschinen durch Spritzguß oder Extrusion gemischt und zu Formmassen verarbeitet werden.

Die Formmassen können zusätzlich noch Füllstoffe, wie Talkum, oder Verstärkungsmittel, wie Glas-, ARAMID^{R}- oder Kohlefasern, sowie andere übliche Zusätze, wie z. B. Pigmente oder Stabilisatoren, enthalten.

Die erfindungsgemäßen Formmassen werden nach üblichen Verfahren wie Spritzguß, Extrusion o. ä. zu Formteilen, Fasern, Folien usw. verarbeitet. Ebenso ist die Verwendung als Beschichtungsmittel ausgehend vom Pulver (z. B. Wirbelsinterverfahren), einer flüssigen Dispersion oder einer Lösung möglich.

Es wurde festgestellt, daß die erfindungsgemäßen Formmassen gegenüber den aromatischen Polyamiden (Komponente I.) deutlich besser zu verarbeiten sind, d. h. eine niedrigere Schmelzviskosität aufweisen. Gleichzeitig zeigen sie eine deutlich verbesserte Wärmeformbeständigkeit sowie Dauergebrauchstemperatur.

Die in der Beschreibung und in den Beispielen genannten Parameter wurden mit Hilfe nachstehender Verfahren bestimmt.

Der Glaspunkt (T_{g}) und der Schmelzpunkt (Tₘ) wurden unter Verwendung eines DSC (METTLER TA 3 000) bei einer Aufheizrate von 20 °K/min. bestimmt.

Die Viskositätszahlen (J) wurden an 0,5 % Gew.-%igen Lösungen der Polyamide in einem Phenol/o-Dichlorbenzol-Gemisch (1 : 1 Gewichtsteile) bei 25 °C nach DIN 53 728 bestimmt.

Der Schmelzviskositätsindex (MVI-Wert) wurde an einem Göttfert-Viskosimeter bei 320 °C und 21,6 Kp Last nach DIN 53 735-B bestimmt.

Mit Buchstaben gekennzeichnete Beispiele sind nicht erfindungsgemäß.-

### Beispiele

### Beispiel A: (gemäß DE-OS 36 09 011 - Beispiel 1)

216,2 g (0,5 Mol) 4,4'-Bis(4-aminophenoxy)diphenylsulfon, 83,1 g (0,5 Mol) Isophthalsäure wurden in Gegenwart von 3,1 g (0,01 Mol) Triphenylphosphit und 1,22 g (0,01 Mol) 4-Dimethylaminopyridin in einem Polykondensationsreaktor mit Rührer, Stickstoffeinleitung und Destillationsbrücke bei 250 °C aufgeschmolzen. Die Temperatur wurde nach 20 Minuten auf 300 °C erhöht. Dabei nahm die Viskosität der Schmelze stetig zu, während das im Verlauf der Reaktion freiwerdende Wasser abdestilliert wurde. Nach 30 Minuten bei 300 °C wurde die Reaktion abgebrochen. Die Viskositätszahl (J) betrug 31 cm³/g. Eine Festphasennachkondensation bei 250 °C und 0,5 mbar lieferte nach 20 h ein Polyamid mit J-Wert: 64 cm³/g.
T_{g}: 250 °C MVI-Wert: 10.9 cm³/10 min.

### Beispiel 1

36 g eines gemäß Beispiel A hergestellten aromatischen Polyamids und 4 g eines handelsüblichen Polyphenylensulfids (RYTON^{R} P 4 - Tₘ: 280 °C; MVI-Wert: 204 cm³/10 min. bei 320 °C und 10 Kp Last) wurden in einem Laborkneter (Fa. Haake) 15 min. bei 340 °C unter Stickstoffabdeckung miteinander vermischt. Das erhaltene Blend wies nachstehende Eigenschaften auf:
J-Wert: 68 cm³/g T_{g}: 250 °C
MVI-Wert: 16,4 cm³/10 min. Tₘ: 280 °C

### Beispiele 2 und 3

Die Beispiele 2 und 3 wurden analog Beispiel 1 durchgeführt, jedoch wurde das Mischungsverhältnis aromatisches Polyamid zu Polyphenylensulfid variiert. Die Anteile der einzelnen Komponenten sowie die Eigenschaften der erhaltenen Formmassen zeigt die Tabelle.

**Tabelle**

| Beispiel | PA*⁾ [Gew.-%] | PPS**⁾ [Gew.-%] | J-Wert [cm³/g] | MVI-Wert [cm³/10 min] | T_{g} [°C] | Tₘ [°C] |
|---|---|---|---|---|---|---|
| 1 | 90 | 10 | 68 | 16.4 | 250 | 280 |
| 2 | 80 | 20 | 58 | 18.8 | 250 | 280 |
| 3 | 70 | 30 | 63 | 23.5 | 250 | 280 |
| A | 100 | 0 | 64 | 10.9 | 250 | - |

| | | | | | | |
|---|---|---|---|---|---|---|
| *⁾ PA: aromatisches Polyamid | | | | | | |
| **⁾ PPS: Polyphenylensulfid | | | | | | |

## Patentansprüche

1. Formmasse auf Basis aromatischer Polyamide enthaltend
I. aromatisches Polyamid mit der Grundstruktur 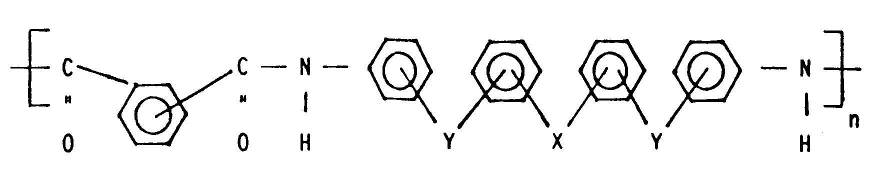 wobei
X: -SO₂-; -CO-
Y: -O-; -S-
bedeuten,
und
II. Polyarylensulfid mit der Grundstruktur 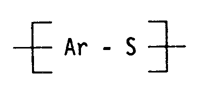 wobei
Ar: 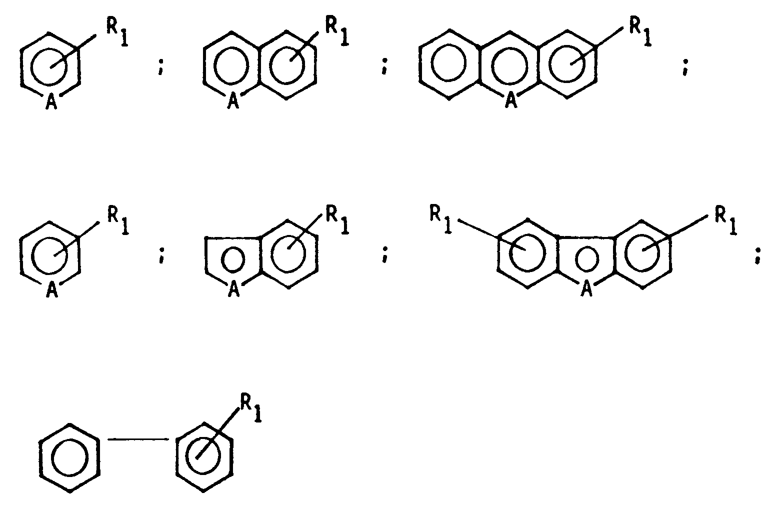
A: -C-; -S-; -O-; -N-;
R₁: -H; C₁ bis C₄ - Alkylreste;
-O-C₁- bis -O-C₄-; -COOH; -CONH-R₂; 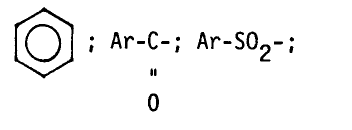 -OH; -NO₂; Halogene
R₂; C₁ bis C₄ - Alkylreste;
bedeutet.

2. Formmasse gemäß Anspruch 1,
dadurch gekennzeichnet,
daß in der Formmasse das Gewichtsverhältnis von Komponente I. zu Komponente II. 95 : 5 bis 5 : 95 beträgt.

3. Formmasse gemäß Anspruch 1 und 2,
dadurch gekennzeichnet,
daß in der Formmasse das Gewichtsverhältnis von Komponente I. zu Komponente II. 90 : 10 bis 10 : 90 beträgt.
